Europäisches Patentamt

European Patent Office

Office européen des brevets

(19)

(11) Publication number: **0 112 611**
A2

(12) # EUROPEAN PATENT APPLICATION

(21) Application number: **83305686.4**

(22) Date of filing: **23.09.83**

(51) Int. Cl.³: **B 60 C 27/04**

(30) Priority: **13.10.82  CA 413322**

(43) Date of publication of application: **04.07.84**
Bulletin **84/27**

(84) Designated Contracting States: **AT BE CH DE FR GB IT
LI LU NL SE**

(71) Applicant: **1862 - 5186 Quebec Inc., 47 Jean-de-Brebeuf,
Lauzon Quebec (CA)**

(72) Inventor: **Beaumont, Raymond, 5080 Henri Bourassa,
Charlesbourg Quebec (CA)**

(74) Representative: **McCulloch, Norman Little et al, Mathys
& Squire 10 Fleet Street, London EC4Y 1AY (GB)**

(54) Traction device for land vehicle tire.

(57) A traction device for a land vehicle tire, which device comprises a rigid frame having a pair of opposed thread engaging arms defining a thread engaging section with a plurality of studs therein. An adjustable interconnecting arm interconnects the thread engaging arms. Tensioning means is provided to exert gripping pressure to the thread engaging section of each of the thread engaging arms against a respective area of a tire thread when the device is fitted on a vehicle tire.

EP 0 112 611 A2

TRACTION DEVICE FOR LAND VEHICLE TIRE

The present invention relates to a traction device which is easily detachably securable to a land vehicle tire, and more particularly to a traction device which comprises a rigid frame having a pair of opposed thread engaging arms and an adjustable interconnecting arm and wherein the device is fitted to the tire from the outside of the tire and secured thereto by actuating a lever arm connected to the interconnecting arm.

Various traction devices are known for securement to land vehicle tires whereby to enhance the traction of the tire when the vehicle is stuck on icy or snow-covered surfaces or any other surface where traction is difficult. However, the majority of these traction devices are time consuming to install, are heavy to carry, many being awkward to store in the vehicle and difficult to remove from the tire when its use is no longer necessary. Also, when a vehicle is stuck in deep snow many of these devices cannot be installed to the tire as they require accessibility to the entire tire circumference for installation. Still further, some of these traction devices require special tools for installation and often become detached from the vehicle when the wheel is rotating at high speed causing damage to the vehicle, particularly when metal chain links are utilized.

It is a feature of the present invention to provide a traction device which substantially overcomes all of the above-mentioned disadvantages of the prior art.

A further feature of the present invention is to provide a traction device which is quickly installed on a tire and easily removable therefrom by the actuation of a single lever arm situated on the outside and centrally of the vehicle wheel.

A further feature of the present invention is to provide a traction device which is lightweight, easily storable in the trunk of a vehicle, and which does not require special instructions for installation.

According to the above features, from a broad aspect, the present invention provides a traction device for a land vehicle tire. The device comprises a rigid frame having a pair of opposed thread engaging arms defining a thread engaging traction section. An adjustable interconnecting arm interconnects the thread engaging arms. Tensioning means is provided to exert gripping pressure to the thread engaging section of each of the thread engaging arms against a respective area of a tire thread when the device is fitted on a vehicle tire.

BRIEF DESCRIPTION OF DRAWINGS

A preferred embodiment of the present

- 3 -

0112611

invention will now be described with reference to the example thereof illustrated in the accompanying drawings in which:

FIGURE 1 is a side view of the traction device of the present invention shown in its engageable position;

FIGURE 2 is a top view of the traction device of the present invention as shown in its engageable position;

FIGURE 3 is an end view of the leg members;

FIGURE 4 is a side view of the traction device of the present invention as shown in its disengaged position; and

FIGURE 5 is a side view showing the traction device of the present invention fitted to a land vehicle tire.

DESCRIPTION OF PREFERRED EMBODIMENTS

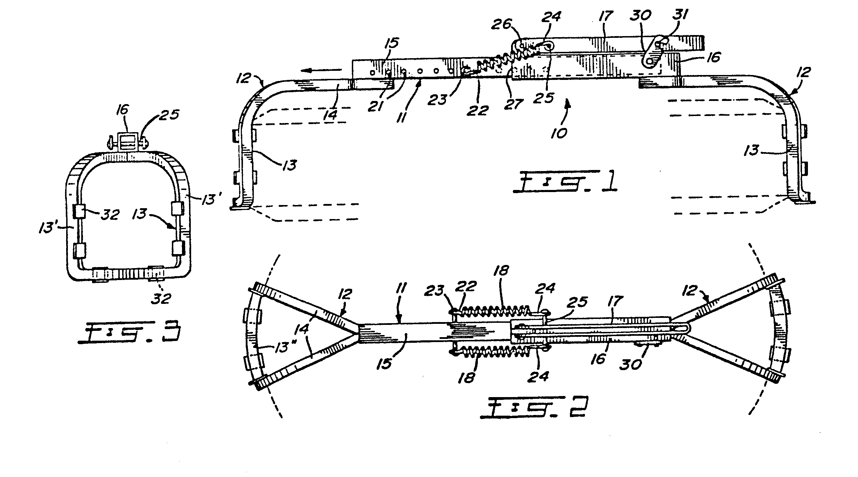

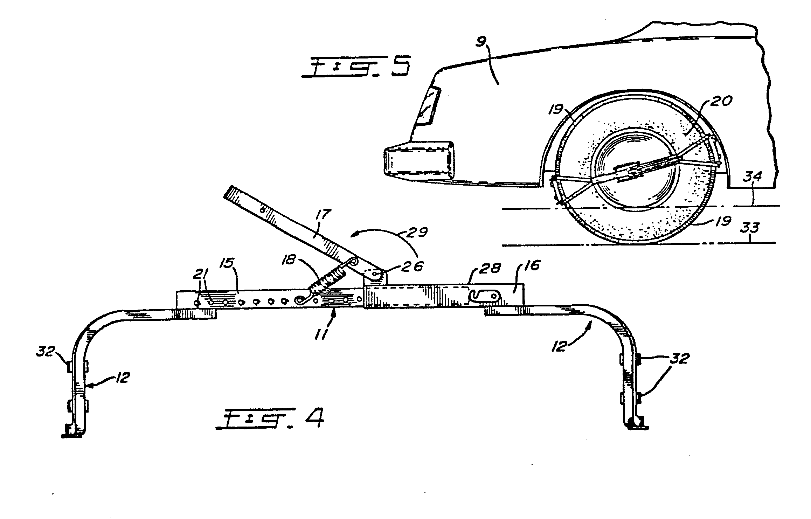

Referring to the drawings and more particularly to Figures 1 to 3, there is shown generally at 10 the traction device of the present invention. The device comprises a rigid frame defining an adjustable interconnecting arm 11 and opposed thread engaging arms 12 secured to each end of the interconnecting arm 11. The thread engaging arms define a thread engaging section constituted by two spaced apart leg members 13 which extend transversely to the interconnecting arm 11 and which are adapted to extend over an area of a tire thread 19 (see Figure 5). The leg members 13 converge together in a connecting section 14 thereof and are secured, by means such as welding, to a respective end of the interconnecting arm 11.

The interconnecting arm 11 is constituted by a rigid tubular member 15 extending into a sleeve member 16. As herein shown the tubular member 15 and the sleeve member 16 are of square cross-section but these could be of different cross-sections, such as rectangular or even circular.

Tensioning means, in the form of a lever arm 17 and a pair of connecting coil springs 18 interconnect the sleeve member 16 to the tubular member 15 for limited longitudinal displacement therebetween whereby to cause displacement of the thread engaging arms 12 toward and away from one another to permit the traction device to be secured on the tire thread 19 of a wheel 20 of the vehicle, as shown in Figure 5.

As shown more clearly in Figure 1 and referring additionally to Figure 4, it can be seen that the rigid tubular member 15 is provided with a plurality of equidistantly spaced transverse holes 21 whereby to selectively connect the end 22 of the coil springs 18 at a convenient location along the tubular member 15 depending on the required length of the interconnecting arm 11, which length is selected whereby the total length of the device is slightly shorter than the

- 5 -                        0112611

diameter of the tire 20 which the traction device 10 is to be secured to. A securing pin 23 is provided to secure the ends 22 of each spring 18 to the tubular member 15. The other end 24 of the coil spring 18 is immovably secured to the lever 17 by means of a pin fastener 25. This fastener 25 is located adjacent the pivot connection 26 provided adjacent the near end 27 of the sleeve member 16.

As shown in Figure 4, when the lever 17 is swung outwardly from the top face 28 of the tubular member 15 on its pivot connection 26 and in the direction of arrow 29, the tubular member 15 moves out of the sleeve member 16 causing the leg members 13 at opposed ends of the device to move further apart, thus permitting the traction device 10 to be positioned substantially diametrically across the tire 20 (see Figure 5). By retracting the lever 17 opposite the direction of arrow 29, back to its initial position as shown in Figure 1, the finger members 13 are caused to move closer together. However, since the length of the device 10 is slightly shorter than the length of the wheel diameter, the springs 18 will stretch applying a restoring force between the members 15 and 16 which exert a gripping inward force on the leg members 13 to grip on the top surface of the tire thread 19.

In order to prevent the lever 17 from accidental release when the device is in use, a hook member 30 may be pivotally secured to the side wall of the sleeve member 16 and engage a pin 31 on the side wall of the lever arm 17 to maintain it in its retracted position.

As shown more clearly in Figures 1, 2 and 3, the leg members 13 comprise two side leg members 13' and an interconnecting end leg member 13" formed integrally with the side leg members. As shown in Figure 2 the interconnecting leg 13" is arcuately shaped whereby to conform to the arcuate contour of the tire thread to provide better securement thereto. Studs 32 in the form of U-shaped steel clamp elements are welded on the finger members and extend above the top face thereof whereby to provide a ground surface traction means. The studs of the side legs 13' also extend beyond the lower face of these legs whereby to provide better engagement with the tire thread to prevent the device from disengagement during use when the wheel is rotating and the finger members are subjected to side forces when engaging a ground surface 33 (see Figure 5). Any force exerted on the leg members 13' causing slight displacement thereof is transmitted through the interconnecting leg 11 which acts as a shock absorber.

As shown in Figure 5, when a vehicle wheel is stuck in deep snow, such as designated by reference numeral 34, the device is still easily securable to the vehicle tire 20. Even if the snow line 34 was above the wheel, it is only necessary to clear snow on the outside

0112611

half of the wheel to attach the device 10.

It is within the ambit of the present invention to cover any obvious modifications of the example of the preferred embodiment described herein, provided such modifications fall within the scope of the appended claims.

CLAIMS:

1. A traction device for a land vehicle tire, said device comprising a rigid frame having a pair of opposed thread engaging arms defining a thread engaging traction section, an adjustable interconnecting arm interconnecting said thread engaging arms, tensioning means to exert gripping pressure to said thread engaging section of each said arms against a respective area of said tire thread.

2. A traction device as claimed in Claim 1, wherein said adjustable interconnecting arm is a rigid member extending into a hollow sleeve member, a lever arm pivotally secured to said sleeve member, and spring means connected at one end to said tubular member and at an opposed end to said sleeve member.

3. A traction device as claimed in Claim 2, wherein said tubular member is provided with a plurality of spring securing means therealong to adjust the effective length of said interconnecting arm.

4. A traction device as claimed in Claim 3, wherein said spring securing means is constituted by a plurality of equidistantly spaced holes along said tubular member, a selected one of said holes receiving a spring securing bolt therein to secure said one end of said spring means thereto.

5. A traction device as claimed in Claim 4, wherein said spring means is constituted by two coil springs each secured at one end to a respective opposed end of said bolt on a respective side of said tubular member, and secured at their opposed end to a respective side of said lever arm to displaceably interconnect said tubular member to said sleeve member via said lever arm for limited longitudinal displacement therebetween.

6. A traction device as claimed in Claim 3, wherein said thread engaging section comprises at least two spaced apart side leg members adapted to extend over an area of said tire thread, said leg members extending substantially transverse to said interconnecting arm.

7. A traction device as claimed in Claim 6, wherein said leg members extend substantially parallel to each other, and an interconnecting end leg member formed integrally with said side leg members, and traction studs secured to said leg members.

8. A traction device as claimed in Claim 7, wherein said studs are U-shaped metal clamp studs welded on said leg members, said leg members being metal rods, said rods of one thread engaging arm being secured to said rigid tubular member, said rods of said other thread engaging arm being secured to said sleeve member.

9. A traction device as claimed in Claim 8, wherein there are two of said studs connected to each said side leg members and extend above and below a top face and bottom face of said side leg members to grip said tire and a ground surface, respectively.

10. A traction device as claimed in Claim 5, wherein said lever arm is hingedly connected to a top side of said sleeve member adjacent an end thereof receiving said tubular member and hingedly displaceable on an arc extending from a top face of said sleeve member toward said tubular member to cause limited longitudinal displacement between said members, said lever arm when displaced against said top face of said sleeve member with said thread engaging arm resting against diametrically opposed sections of said tire thread causing said coil springs to stretch to apply said gripping pressure of said thread engaging arms against said tire thread sections.

11. A traction device as claimed in Claim 1, wherein said thread engaging traction section has a plurality of traction studs.

FIG. 1

FIG. 2

FIG. 3

Fig. 5

Fig. 4